# DEMANDE DE BREVET EUROPEEN

(11) **EP 0 531 205 A1**
(43) Date de publication de la demande: **10.03.1993**
(21) Numéro de dépôt: 92402389.8
(22) Date de dépôt: 02.09.1992
(51) Int. Cl.: B60S 1/48, F28D 7/02

(54) **Dispositif de chauffage d'un liquide de lave-glace, notamment pour un pare-brise de véhicule automobile**

(30) Priorité: 03.09.1991 FR 9110857
(71) Demandeur: VALEO SYSTEMES D'ESSUYAGE, 78180 Montigny-Le-Bretonneux (FR)
(72) Inventeur: Soreau, Marc, F-75014 Paris (FR); Viaene, Alain, F-78180 Montigny-le-Bretonneux (FR)
(74) Mandataire: Gamonal, Didier

(57) **Abrégé**

L'invention concerne un dispositif de chauffage d'un liquide de lave-glace, comprenant une enceinte (12) limitée par une paroi généralement tubulaire (14) et propre à être traversée par un fluide chaud, ainsi qu'un serpentin (12) constitué d'un tube enroulé en une multiplicité de spires (34), logé à l'intérieur de l'enceinte et propre à être traversé par le liquide de lave- glace, le serpentin (32) se prolongeant par une tubulure d'entrée de liquide (36) et une tubulure de sortie de liquide (38) pour le liquide de lave-glace, traversant à étanchéité la paroi de l'enceinte.

Conformément à l'invention, la paroi (34) comprend au moins un enfoncement (44) propre à venir en contact avec le tube enroulé (32) pour maintenir ce dernier à distance de la paroi et favoriser ainsi les échanges thermiques entre le fluide chaud et le liquide de lave-glace.

Application notamment aux véhicules automobiles.

## Description

L'invention concerne un dispositif de chauffage d'un liquide de lave-glace, destiné notamment à un pare-brise de véhicule automobile.

On a déjà proposé de chauffer un liquide de lave-glace afin d'améliorer l'efficacité de nettoyage de ce liquide lorsqu'il est projeté sur une surface vitrée, par exemple sur un pare-brise d'un véhicule automobile.

On connaît, d'après les documents FR-A-2 129 629 et EP-A- 0 271 821, des dispositifs de chauffage de ce type qui sont propres à être interposés entre un réservoir de liquide de lave- glace et au moins un gicleur placé en avant d'une surface vitrée à nettoyer.

Ces deux dispositifs connus comprennent une enceinte limitée par une paroi généralement tubulaire et propre à être traversée par un fluide chaud, ainsi qu'un serpentin constitué d'un tube enroulé en une multiplicité de spires, ce serpentin étant logé à l'intérieur de l'enceinte et propre à être traversé par le liquide de lave-glace, ce serpentin se prolongeant par une tubulure d'entrée de liquide et une tubulure de sortie de liquide traversant à étanchéité la paroi de l'enceinte.

Le serpentin est alors balayé par le fluide chaud qui cède de l'énergie thermique au liquide de lave-glace. Ce fluide chaud est habituellement constitué par le liquide de refroidissement du moteur du véhicule, ou encore par les gaz d'échappement du moteur.

Pour améliorer la transmission thermique entre le fluide chaud circulant dans l'enceinte et le liquide de lave-glace circulant dans le serpentin, il est nécessaire que la totalité de la surface extérieure des spires du serpentin soit balayée par le fluide chaud.

Pour cela, on prévoit de disposer les spires à distance de la paroi de l'enceinte et, si possible, de disposer les spires à distance les unes des autres.

Cette disposition présente certains inconvénients du fait que le serpentin se trouve suspendu à l'intérieur de l'enceinte par ses deux tubulures qui sont ancrées dans la paroi de l'enceinte.

En effet, sous l'effet des variations du courant de fluide chaud circulant dans l'enceinte, le serpentin est soumis à une flexion continuelle autour du point d'ancrage de ses tubulures. Cette flexion peut entraîner à l'usage une fissure ou une rupture au niveau de la traversée des tubulures dans la paroi de l'enceinte, laquelle peut entraîner une pénétration du liquide de lave-glace dans le circuit de refroidissement du moteur.

Par ailleurs, il peut arriver que, sous l'effet des variations de circulation du courant du fluide chaud, les spires viennent en contact les unes avec les autres pour entraîner, à la longue, une érosion de la paroi du tube formant la spire et son percement, pouvant occasionner également une pénétration du liquide de lave-glace dans le circuit de refroidissement du moteur.

L'invention a notamment pour but de surmonter les inconvénients précités.

Elle propose, en conséquence, un dispositif de chauffage d'un liquide de lave-glace, du type défini en introduction, dans lequel la paroi généralement tubulaire de l'enceinte comprend aumoins un enfoncement propre à venir en contact avec le serpentin pour maintenir ce dernier à distance de la paroi.

Ainsi, conformément à l'invention, le serpentin peut être maintenu à distance de la paroi.

Dans une première forme générale de réalisation de l'invention, le ou chaque enfoncement est dirigé vers l'intérieur de l'enceinte.

Avantageusement, le dispositif comprend alors plusieurs enfoncements dirigés vers l'intérieur de l'enceinte et répartis équiangulairement entre eux sur une section de la paroi tubulaire.

Par exemple, le dispositif peut comprendre trois enfoncements répartis à 120° les uns des autres.

De préférence, chaque enfoncement est formé par une nervure s'étendant parallèlement à une génératrice de la paroi.

Dans une seconde forme générale de réalisation de l'invention, le ou chaque enfoncement est dirigé vers l'extérieur de l'enceinte.

Avantageusement, le dispositif comprend deux enfoncements diamétralement opposés et constitués chacun d'une rainure débouchant à l'intérieur de l'enceinte et s'étendant suivant une direction sensiblement parallèle à une génératrice de la paroi.

Le serpentin comprend alors deux tronçons sensiblement rectilignes s'étendant parallèlement entre eux, de part et d'autre des spires, et reliés respectivement à la tubulure d'entrée et à la tubulure de sortie de liquide, les deux tronçons étant engagés respectivement dans les deux enfoncements en forme de rainures.

Dans cette forme de réalisation de l'invention, la paroi tubulaire comprend avantageusement un coude, les deux tubulures d'entrée et de sortie traversant alors la paroi tubulaire dans la région du coude.

De préférence, dans l'une ou l'autre des formes de réalisation précitées, la paroi tubulaire du tube est à section circulaire.

Dans la description qui suit, faite seulement à titre d'exemple, on se réfère aux dessins annexés, sur lesquels :
- la figure 1 est une vue en coupe d'un dispositif de chauffage selon la première forme de réalisation précitée, la coupe étant prise suivant la ligne I-I de la figure 2;
- la figure 2 est une vue en coupe suivant la ligne II-II de la figure 1;
- la figure 3 est une vue en coupe d'un dispositif de chauffage selon la seconde forme de réalisation de l'invention, la coupe étant prise suivant la ligne III-III de la figure 4; et
- la figure 4 est une vue en coupe suivant la ligne IV-IV de la figure 3.

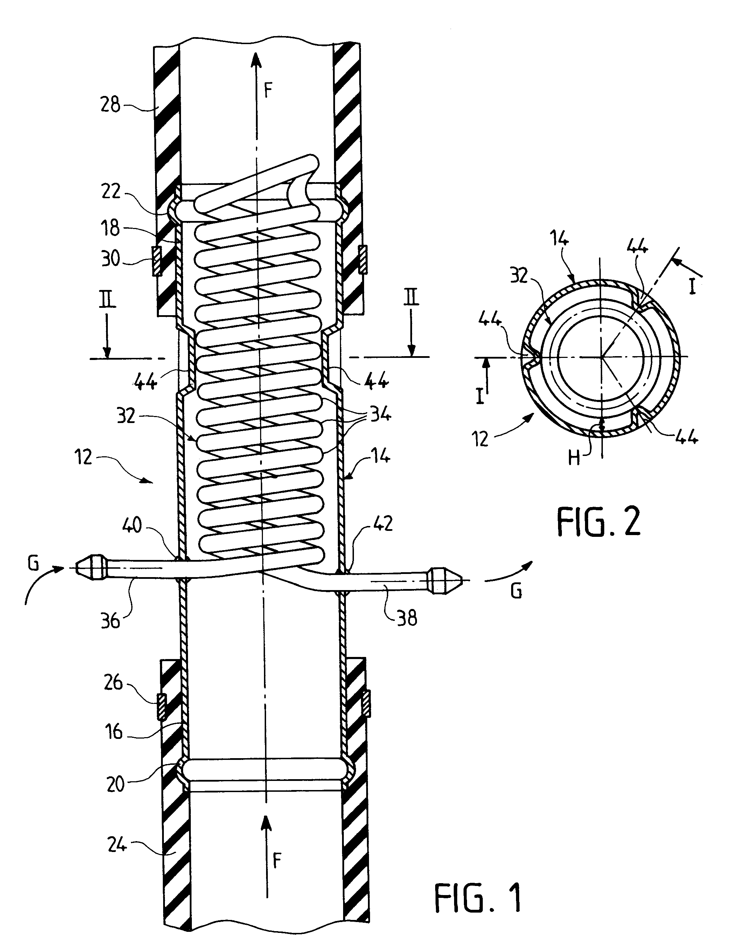

On se réfère tout d'abord aux figures 1 et 2 qui représentent un dispositif de chauffage d'un liquide de lave-glace selon l'invention. Ce dispositif comprend une enceinte 12 limitée par une paroi tubulaire 14 rectiligne et à section circulaire. La paroi 14 qui, dans l'exemple, est réalisée en une matière métallique, comprend deux extrémités ouvertes 16-et 18 munies respectivement d'un bourrelet 20, 22. Sur l'extrémité 16 est raccordé un tuyau 24 maintenu par un collier de serrage 26 et servant à l'introduction d'un fluide chaud à l'intérieur de l'enceinte. Ce fluide chaud est avantageusement constitué par le fluide de refroidissement d'un moteur à combustion interne d'un véhicule automobile.

Sur l'autre extrémité 18 de l'enceinte 12 est monté un tuyau 28 maintenu par un collier de serrage 30 pour permettre l'évacuation du fluide chaud après sa traversée dans l'enceinte, comme indiqué par les flèches F.

A l'intérieur de l'enceinte 12 est logé un serpentin 32, constitué d'un tube enroulé pour former une multiplicité de spires hélicoïdales 34. Le diamètre externe du serpentin 32 est inférieur au diamètre interne de la paroi 14 pour ménager un espacement entre eux. Par ailleurs, les spires 34 ne sont pas jointives, de sorte que le fluide chaud traversant l'enceinte 12 peut balayer la totalité de la surface des spires.

Dans l'exemple, les spires sont enroulées suivant deux hélices imbriquées l'une dans l'autre, le tube constitutif du serpentin se prolongeant, d'un côté, par une tubulure 36 d'entrée de liquide et, de l'autre côté, par une tubulure 38 de sortie de liquide. Les deux tubulures 36 et 38 traversent à étanchéité la paroi 14 et sont ancrées à celle- ci. Avantageusement, le tube est formé en un matériau métallique bon conducteur de la chaleur, par exemple en cuivre, et les deux tubulures 36 et 38 sont ancrées dans la paroi 14, au niveau des traversées, par des joints de soudure ou de brasure 40 et respectivement 42. Le serpentin 32 est destiné à être parcouru par un liquide de lave-glace qui entre par la tubulure 36 et ressort par la tubulure 38 après avoir été réchauffé par le fluide chaud, comme indiqué par les flèches G.

La paroi 14 de l'enceinte 12 comprend trois enfoncements 44 formés au niveau d'un même tronçon de la paroi et dirigés radialement vers l'intérieur de l'enceinte. Chacun des trois enfoncements 44 s'étend parallèlement aux génératrices de la paroi tubulaire 14, les trois enfoncements étant disposés à 120° les uns par rapport aux autres (figure 2). Chacun des enfoncements est en saillie, par rapport à la face interne de la paroi 14, suivant une hauteur H correspondant à l'espacement entre le serpentin 32 et la paroi 14 (figure 2).

Dans ces conditions, le serpentin 32 est maintenu en position à l'intérieur de la paroi 14 et dans une disposition coaxiale avec celle-ci. A l'une de ses extrémités, le serpentin est maintenu en position grâce aux ancrages des tubulures 36 et 38 dans la paroi 14. Dans sa région centrale, le serpentin est maintenu en position d'écartement grâce aux trois enfoncements 44 dont chacun vient au contact avec deux spires consécutives du serpentin.

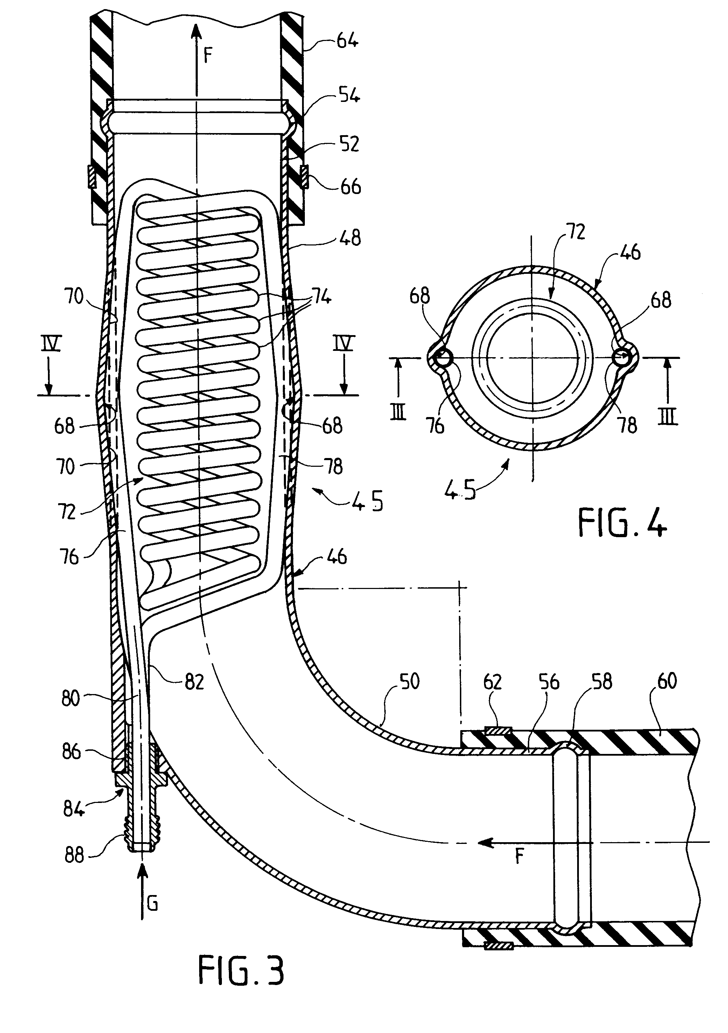

Dans la forme de réalisation des figures 3 et 4, auxquelles on se réfère maintenant, le dispositif comprend une enceinte 45 constituée par une paroi tubulaire 46 à section circulaire comportant un tronçon rectiligne 48 et un tronçon coudé 50. Le tronçon rectiligne 48 de l'enceinte 45 possède une extrémité ouverte 52 pourvue d'un bourrelet 54, tandis que le tronçon coudé 50 de l'enceinte 45 comprend une extrémité ouverte 56 pourvue d'un bourrelet 58. Sur l'extrémité 56 est monté un tuyau souple 60 au moyen d'un collier de serrage 62 pour permettre l'introduction d'un fluide chaud à l'intérieur de l'enceinte. Sur l'extrémité 52 est monté un tuyau 64 au moyen d'un collier de serrage 66 pour l'évacuation du fluide chaud. La circulation du fluide chaud dans l'enceinte s'effectue dans la direction des flèches F.

Dans la région de son tronçon rectiligne 48, la paroi 44 comprend deux enfoncements 68 diamétralement opposés et dirigés vers l'extérieur de l'enceinte. Les deux enfoncements 68 s'étendent dans des directions sensiblement parallèles aux génératrices du tronçon 48 et définissent ainsi deux rainures en vis-à-vis qui débouchent à l'intérieur de l'enceinte et qui tournent leur concavité l'une vers l'autre. Le fond de chacune des rainures 68 est délimité par deux lignes 70 qui se raccordent suivant un angle obtus entre elles.

A l'intérieur de l'enceinte 45 est logé un serpentin 72, formé d'un tube enroulé possédant une multiplicité de spires non-jointives 74 enroulées suivant deux hélices imbriquées l'une dans l'autre. Le serpentin 72 comprend deux tronçons de tube 76 et 78 sensiblement rectilignes et sensiblement parallèles entre eux qui sont disposés de part et d'autre des spires et qui se raccordent chacun aux spires du serpentin. Les deux tronçons 76 et 78 sont destinés à s'encastrer respectivement dans les deux enfoncements 68 pour maintenir le serpentin en position à l'intérieur de l'enceinte, en ménageant un espace entre le serpentin et la paroi interne de l'enceinte. Chacun des tronçons 76 et 78 se poursuit par une tubulure d'entrée 80 et une tubulure de sortie 82 pour un liquide de lave-glace. Les deux tubulures traversent la paroi 46 de l'enceinte 45 dans la région du tronçon coudé 50. Dans l'exemple, chacune des tubulures d'entrée et de sortie, par exemple la tubulure d'entrée 80, est munie d'un raccord 84 qui comprend une partie filetée 86 vissée dans un alésage approprié que ménage la paroi de l'enceinte et une partie de raccordement opposée 88. Le liquide de lave-glace entre par la tubulure 80 et ressort par la tubulure 82, comme indiqué par la flèche G.

Ainsi, le serpentin 72 se trouve parfaitement maintenu en position à l'intérieur de l'enceinte en ménageant un espacement entre le serpentin et la paroi.

Comme dans la forme de réalisation précédente, l'enceinte 45 est avantageusement formée en un matériau métallique et, de même, le serpentin 72 est avantageusement formé en matériau métallique bon conducteur, par exemple en cuivre.

Bien entendu, le fluide servant à réchauffer le lave-glace pourrait être constitué, non pas par un liquide, tel que le liquide de refroidissement d'un moteur de véhicule, mais par les gaz d'échappement de ce moteur.

Conformément à l'invention, le serpentin se trouve parfaitement maintenu dans l'enceinte et à distance de la paroi tubulaire de celle-ci.

Le serpentin ne risque pas de subir de flexion et la totalité de la surface extérieure des spires est balayée par le courant de fluide chaud.

## Revendications

**1.-** Dispositif de chauffage d'un liquide de lave-glace, comprenant une enceinte (12;45) limitée par une paroi généralement tubulaire (14;46) et propre à être traversée par un fluide chaud, ainsi qu'un serpentin (32;72) constitué d'un tube enroulé en une multiplicité de spires (34;74), logé à l'intérieur de l'enceinte et propre à être traversé par le liquide de lave-glace, ce serpentin se prolongeant par une tubulure d'entrée de liquide (36;80) et par une tubulure de sortie de liquide (38;82), traversant à étanchéité la paroi de l'enceinte, caractérisé en ce que ladite paroi (14;46) comprend au moins un enfoncement (44;68) propre à venir en contact avec le serpentin (32;72) pour maintenir ce dernier à distance de la paroi.

**2.-** Dispositif selon la revendication 1,
caractérisé en ce que le ou chaque enfoncement (44) est dirigé vers l'intérieur de l'enceinte (12).

**3.-** Dispositif selon la revendication 2,
caractérisé en ce qu'il comprend plusieurs enfoncements (44) dirigés vers l'intérieur de l'enceinte (12) et répartis équiangulairement entre eux sur une section de la paroi.

**4.-** Dispositif selon la revendication 3,
caractérisé en ce qu'il comprend trois enfoncements (44) répartis à 120° les uns par rapport aux autres, chaque enfoncement formant une nervure dirigée parallèlement à une génératrice de la paroi.

**5.-** Dispositif selon la revendication 1,
caractérisé en ce que le ou chaque enfoncement (68) est dirigé vers l'extérieur de l'enceinte (45).

**6.-** Dispositif selon la revendication 5,
caractérisé en ce qu'il comprend deux enfoncements (68) diamétralement opposés et constitués chacun d'une rainure sensiblement rectiligne débouchant à l'intérieur de l'enceinte et s'étendant dans une direction sensiblement parallèle à une génératrice de la paroi.

**7.-** Dispositif selon la revendication 6,
caractérisé en ce que le serpentin (72) comprend deux tronçons de tube (76,78) sensiblement rectilignes et s'étendant parallèlement entre eux, de part et d'autre des spires (74), et reliés respectivement à la tubulure d'entrée (80) et la tubulure de sortie (82), les deux tronçons de tube (76,78) étant engagés respectivement dans les deux enfoncements (68) en forme de rainures.

**8.-** Dispositif selon la revendication 7,
caractérisé en ce que la paroi tubulaire (46) comprend une partie coudée (50) et en ce que la tubulure d'entrée (80) et la tubulure de sortie (82) du liquide de lave-glace traversent la paroi tubulaire de l'enceinte dans la région du coude (50).

**9.-** Dispositif selon l'une des revendications 1 à 8, caractérisé en ce que la paroi tubulaire (14;46) possède une section circulaire.
